# EUROPÄISCHE PATENTSCHRIFT

(11) **EP 0 907 010 B1**
(45) Veröffentlichungstag und Bekanntmachung des Hinweises auf die Patenterteilung: **16.04.2003**
(21) Anmeldenummer: 98116123.5
(22) Anmeldetag: 26.08.1998
(51) Int. Cl.: F01N 3/08, F01N 3/20, B01D 53/94

(54) **Verfahren zum Betrieb einer mit Luftüberschuss arbeitenden Brennkraftmaschine**
Method for operating a lean-burn internal combustion engine
Procédé de commande d'un moteur à combustion interne à mélange pauvre

(30) Priorität: 16.09.1997 DE 19740702
(43) Veröffentlichungstag der Anmeldung: 07.04.1999
(73) Patentinhaber: SIEMENS AKTIENGESELLSCHAFT, 80333 München (DE)
(72) Erfinder: Zuerbig, Jürgen, 96224 Burgkunstadt (DE); Tost, Rainer, 90427 Nürnberg (DE); Doelling, Winfried, 96369 Weissenbrunn (DE); Latsch, Reinhard, 74889 Sinsheim (DE)

(56) Entgegenhaltungen:
- EP-A- 0 615 777
- WO-A-97/16632
- DE-A- 19 626 835
- DE-A- 19 643 027
- PATENT ABSTRACTS OF JAPAN vol. 018, no. 691 (M-1731), 26. Dezember 1994 (1994-12-26) & JP 06 272545 A (TOYOTA MOTOR CORP), 27. September 1994 (1994-09-27)
- PATENT ABSTRACTS OF JAPAN vol. 095, no. 004, 31. Mai 1995 (1995-05-31) & JP 07 011947 A (MAZDA MOTOR CORP), 13. Januar 1995 (1995-01-13)
- PATENT ABSTRACTS OF JAPAN vol. 012, no. 292 (M-729), 10. August 1988 (1988-08-10) & JP 63 068714 A (MAZDA MOTOR CORP), 28. März 1988 (1988-03-28)
- PATENT ABSTRACTS OF JAPAN vol. 097, no. 007, 31. Juli 1997 (1997-07-31) & JP 09 088560 A (NISSAN MOTOR CO LTD), 31. März 1997 (1997-03-31)

## Beschreibung

Die Erfindung betrifft ein Verfahren und eine Vorrichtung zum Betrieb einer mit Luftüberschuß arbeitenden Brennkraftmaschine gemäß den Oberbegriffen der unabhängigen Patentansprüche.

Die Verminderung der Stickoxidemission einer mit Luftüberschuß betriebenen Brennkraftmaschine, insbesondere einer Dieselbrennkraftmaschine kann mit einem ammoniakhaltigen Reduktionsmittel an einem selektiv arbeitenden Katalysator (SCR-Katalysator) zu N₂ und H₂O erfolgen (SCR Selectiv Catalytic Reduction). Als Reduktionsmittel werden entweder gasförmiges Ammoniak (NH₃), Ammoniak in wässriger Lösung oder Harnstoff in wässriger Lösung eingesetzt. Bei Verwendung von Harnstoff als Reduktionsmittel wird der Harnstoff vor einem Hydrolysekatalysator in das Auspuffsystem eingespritzt, dort mittels Hydrolyse zu Ammoniak umgewandelt, der dann wiederum im eigentlichen SCR-Katalysator die Stickoxide reduziert. Bei einem solchen Verfahren ergibt sich bei schneller Lasterhöhung der Brennkraftmaschine eine besonders große NOₓ-Emission.

Hauptursache dafür ist, daß bei Lasterhöhung die NOₓ-Rohemission der Brennkraftmaschine sprunghaft zunimmt. Gleichzeitig wird das Adsorbtionsvermögen des SCR-Katalysators mit der dabei steigenden Temperatur von Abgas und Katalysator geringer.

Ein zusätzliches Problem ergibt sich im Warmlauf, wenn der Katalysator seine Betriebstemperatur noch nicht erreicht hat. In diesem Fall findet keine Konvertierung der Stickoxide statt. Bei einer besseren NOₓ-Absenkung in den beiden vorgenannten Betriebszuständen könnte die mittlere Konvertierung im Abgastest deutlich gesteigert werden.

In der WO 94/04258 ist ein Verfahren zur katalytischen Umsetzung von der im Abgas einer Brennkraftmaschine enthaltenen Stickoxiden bekannt, bei der ein übliches Denoxverfahren mit Zugabe von Reduktionsmitteln mit einem NOₓ-Adsorber kombiniert ist. Dabei leistet der NOₓ -Adsorber bei der Absenkung von NOₓ die Hauptaufgabe, in dem jeweils der Adsorber aufgeladen und das durch Desorbtion des Adsorbers erzeugte Abgas einem Denoxkatalysator zugeführt wird. Ein solches Verfahren hat den Nachteil, daß der SCR-Katalysator nur ungenügend auf den jeweiligen Anfall von Abgas mit hoher NOₓ -Konzentration eingestellt ist. Zudem weisen bisherige Adsorbersysteme eine unbefriedigende Standzeit auf. Das gilt insbesondere im Zusammenhang mit schwefelhaltigen Kraftstoffen.

Weitere Verfahren mit gleichzeitiger Verwendung von NOₓ - Adsorbern und Denoxsystemen sind in den deutschen Offenlegungsschriften DE 196 26 835, DE 196 26 836, DE 196 26 837 und der europäischen Patentanmeldung EP 0 702 134 beschrieben.

Die in der DE 196 26 835 beschriebene Abgasanlage weist zwei von einer Klappe alternativ freigebbare Abgasstränge auf, wobei in dem einen ein NOₓ-Speicherkatalysator und in dem anderen ein Oxidationskatalysator vorgesehen sind. Dem NOₓ - Speicherkatalysator ist eine Kraftstoffeindüsung vorgeschaltet, deren Steuerung über eine nach dem NOₓ -Speicherkatalysator angeordnete Lambdasonde erfolgt. Nach der Zusammenführung der beiden Abgasstränge ist ein Oxidationskatalysator vorgesehen. Im Schubbetrieb und Leerlaufbetrieb der Dieselbrennkraftmaschine schließt die Klappe den Abgasstrang mit dem NOₓ-Speicherkatalysator von dem Abgasstrom, so dass nur eine Mindestdurchströmung des NOₓ-Speicherkatalysators stattfindet. Gleichzeitig wird durch Kraftstoffeindüsung in der Mindestdurchströmung ein Lambda < 1 erzeugt, so dass eine Regeneration des NOₓ-Speicherkatalysators stattfindet.

In der JP-A-06272545 ist eine Vorrichtung zu Abgasnachbehandlung einer Brennkraftmaschine bekannt, die ein Abgasrohr aufweist, dass zunächst in zwei symmetrisch ausgebildete Teilabgasstränge aufgeteilt und anschließend wieder zusammengefügt sind und in dessen weiterer Verlauf ein NOx-Katalysator angeordnet ist. In der Verzweigung des Abgasrohrs ist ein elektrisch ansteuerbares Umschaltventil angeordnet, das wahlweise den Abgasstrom aus dem Abgasrohr entweder in den einen Abgasstrang oder in den anderen Abgasstrom leitet. In einem Abgangstrang ist ein NOx-Adsorberkatalysator angeordnet. Stromaufwärts dieses NOx-Adsorberkatalysators ist ein Zumessventil für ein Reduktionsmittel vorgesehen.

Der Erfindung liegt die Aufgabe zugrunde, die NOₓ-Emission bei Instationärbetrieb, insbesondere bei Lasterhöhung sowie im Warmlauf der Brennkraftmaschine weiter zu vermindern, als es mit den üblichen SCR-Systemen möglich ist. Zudem soll die Lebensdauer des Gesamtsystems der Fahrzeuglebensdauer angepasst werden, das heißt die Beaufschlagung des Adsorbers mit Abgas auf ein minimalen Zeitbereich begrenzt sein.

Diese Aufgabe wird gemäß den Merkmalen der unabhängigen Patentansprüche gelöst.

Durch die Einschaltung eines Bypasses zur Abgasleitung mittels einer elektrisch ansteuerbaren Abgasklappe kann der Abgasstrom bei bestimmten Betriebszuständen der Brennkraftmaschine, insbesondere bei schneller Lastanhebung oder beim Warmlauf teilweise oder vollständig über einen im allgemeinen dann relativ kühlen Adsorptionskatalysator geleitet werden, wobei das im Abgas enthaltene NOₓ in besonders günstiger Weise adsorbiert wird.

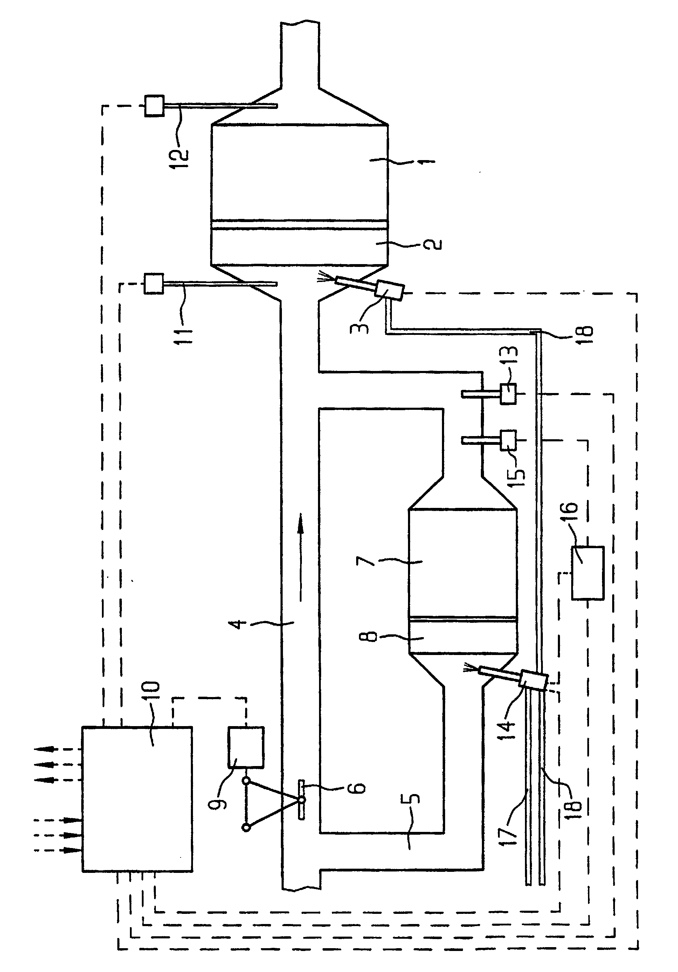

Die abhängigen Ansprüche betreffen vorteilhafte Weiterbildungen und Ausgestaltungen der im folgenden anhand der einzigen Zeichnungsfigur erläuterten Erfindung. Dabei sind in dem beschriebenen Ausführungsbeispiel nur diejenigen Teile dargestellt, die für das Verständnis der Erfindung notwendig sind.

In einer mit der Auslaßseite einer nichtdargestellten Brennkraftmaschine verbundenen Hauptabgasleitung 4 ist ein SCR- bzw. ein DeNOx-Katalysator 1 mit vorgeschaltetem Hydrolysekatalysator 2 angeordnet. Vor dem Hydrolysekatalysator 2 ist ein Zumeßventil 3 für ein Reduktionsmittel, beispielsweise Harnstoff vorgesehen. Der Hydrolysekatalysator hat dabei die Aufgabe, aus den in wässriger Lösung zudosierten Harnstoff das Reduktionsmittel Ammoniak zu erzeugen. Im NOₓ-Reduktionsteil, nämlich dem SCR-Katalysator, wird dann mit Hilfe des Ammoniaks das Stickoxid in die ungefährlichen Komponenten Stickstoff, Kohlendioxid und Wasser umgewandelt. Zusätzlich wirkt der SCR-Katalysator auch als Oxidationskatalysator für Kohlenwasserstoffe.

Das Reduktionsmittel wird mittels einer Pumpe aus einem Vorratsbehälter (nicht dargestellt) gefördert und über eine Reduktionsmittelleitung 18 dem Zumeßventil 3 zugeführt.

Temperatursensoren 11, 12 erfassen die Temperatur des Abgases stromauf- und stromabwärts des SCR-Katalysators.

In der Hauptabgasleitung 4 ist eine, über einen Stellantrieb 9 verschwenkbare Abgasklappe 6 vorgesehen, so daß der Durchlaßquerschnitt der Hauptabgasleitung 4 verändert werden kann. Stromaufwärts der Abgasklappe 6 zweigt von der Hauptabgasleitung 4 eine Bypassleitung 5 ab, in deren weiterem Verlauf ein Adsorptionskatalysator 7 mit einem vorgeschaltenem Hydrolysekatalysator 8 angeordnet ist. Die Bypaßleitung 5 mündet an einer Stelle stromaufwärts des Hydrolysekatalysators 2 wieder in die Hauptabgasleitung 4.

Zur Ermittlung des Beladungszustandes des Adsorptionskatalysators 7 dient ein stromabwärts des Adsorptionskatalysators 7 angeordneter NOₓ-Sensor 13. Alternativ hierzu kann der Beladungszustandes des Adsorptionskatalysators 7 mittels eines mathematischen Modelles bestimmt werden.

Außerdem ist stromabwärts des Adsorptionskatalysators 7 eine Abgassonde 15 angeordnet, dessen Signal einem Regler 16 zugeführt wird und mit dessen Hilfe eine gewünschte Luftzahl und damit eine angepasste Menge an Kraftstoff, zB. Dieselkraftstoff über eine Kraftstoffleitung 17 oder alternativ Reduktionsmittel, z.B. Harnstoff über die bereits erwähnte Reduktionsmittelleitung 18 dem System Hydrolyse/Adsorptionskatalysator 7,8 zugeführt und dadurch das gespeicherte NOₓ desorbiert wird.

Eine elektronische Steuerungseinrichtung 10 übernimmt die Steuerung für das Abgasnachbehandlungssystem. Hierzu werden neben den Signalen der erwähnten Sensoren weitere, für den Betrieb der Brennkraftmaschine notwendige Signale, wie beispielsweise Drehzahl, Regelweg, Ladedruck, Ladelufttemperatur usw. der Steuerungseinrichtung 10 zugeführt. Dies kann vorteilhafterweise über einen CAN-Bus erfolgen. Ausgangsseitig ist die Steuerungseinrichtung 10 über nicht näher bezeichnete Leitungen mit dem Regler 16, dem Zumeßventil 3, der Einspritzdüse 14 und dem Stellantrieb 9 für die Abgasklappe 6 verbunden. Außerdem steuert sie die Pumpe für das Reduktionsmittel an, wertet Signale eines Füllstandssensors für das Reduktionsmittel aus und steuert eine Heizeinrichtung für den Reduktionsmittelbehälter an.

Bei schneller Lasterhöhung und/oder im Warmlauf der Brennkraftmaschine wird der Stellantrieb 9 derart angesteuert, daß die Abgasklappe 6 den Abgasstrom teilweise oder vollständig in die Bypaßleitung 5 leitet. Insbesondere bei schneller Lastanhebung wird das Abgas über den im allgemeinen kühlen Adsorberkatalysator 7 gelenkt, wobei das im Abgas enthaltene NOₓ in besonders günstiger Weise adsorbiert wird.

Die Verstellung der Abgasklappe 6 mittels des Stellantriebes 9 erfolgt in Abhängigkeit von verschiedenen Betriebsparametern, wie zB. Gaspedalstellung bzw. deren zeitliche Änderung, Kraftstoffeinspritzmenge der Brennkraftmaschine bzw. deren zeitliche Änderung, Abgastemperatur vor und nach dem SCR-Katalysator oder Temperatur des SCR-Katalysator selbst.

Zur schnellen Aufheizung und zum Aufrechterhalten einer hohen Temperatur des SCR-Katalysators 1 sind bei Beladung des Adsorbtionskatalysators 7 dieser und der SCR-Katalysator in Reihe geschaltet, der Abgasstrom also aufgrund der geschlossenen Abgasklappe 6 über die Bypaßleitung 5 geführt.

Nachdem der Adsorptionskatalysator 7 mit NOₓ beladen ist, erfolgt eine Desorption durch kurzzeitige Zufuhr von Kraftstoff oder Reduktionsmittel über die Einspritzdüse 14. Über das Signal der Abgassonde 15 und dem Regler 16 wird eine gewünschte Luftzahl und damit die angepasste Menge an zuzuführendem Kraftstoff oder Reduktionsmittel eingestellt, so daß das gespeicherte Nox desorbiert wird. Zur genauen Kontrolle des Adsorptions/Desorptionszustandes des Adsorptionskatalysators 7 wird dieser mit Hilfe des NOx-Sensors überwacht.

Bei dem Desorptionsvorgang wird die Abgasklappe 6 in eine Stellung gebracht, in der ein Teil des Abgasstromes über die Bypaßleitung 5 und damit über den Adsorptionskatalysators 7 strömt, um eine ausreichend hohe Temperatur zu gewährleisten.

Die Erfindung wurde an einem Beispiel erläutert, bei dem Harnstoff in wässriger Lösung vor einem Hydrolysekatalysator zugeführt wird. Bei Verwendung von Kraftstoff oder Ammoniak als Reduktionsmittel ist kein solcher Hydrolysekatalysator notwendig, das Reduktionsmittel wird dann direkt dem Adsorptionskatalysator zugeführt.

## Patentansprüche

1. Verfahren zum Betrieb einer mit Luftüberschuß arbeitenden Brennkraftmaschine, bei dem der Abgasstrom mittels einer Hauptabgasleitung (4) über eine in der Hauptabgasleitung (4) angeordnete NOₓ-Katalysatoreinheit, bestehend zumindest aus einem SCR-Katalysator (1) mit einer Einrichtung (3) zum gesteuerten Eindüsen von Reduktionsmittel geleitet wird und dazu der Lastzustand der Brennkraftmaschine ständig erfasst wird,
wobei,
bei schneller Lasterhöhung und/oder im Warmlauf der Brennkraftmaschine zumindest ein Teil des Abgasstromes über ein Bypaß-System (5,6) zu einem NOx-Adsorptionskatalysator (7) geleitet wird, so daß zur Beladung des NOx-Adsorptionskatalysators (7) das Abgas die Reihenschaltung aus NOx-Adsorptionskatalysator (7) und SCR-Katalysator (1) durchströmt.

2. Verfahren nach Anspruch 1, **dadurch gekennzeichnet, daß** die Umschaltung des Abgasstromes auf das Bypass-System mittels einer in der Hauptabgasleitung (4) angeordneten Abgasklappe (6) erfolgt, die über einen elektrischen Stellantrieb (9) angetrieben wird.

3. Verfahren nach Anspruch 1 oder 2, **dadurch gekennzeichnet, daß** die Umschaltung des Abgasstromes auf das Bypass-System zumindest abhängig von der Gaspedalstellung der Brennkraftmaschine oder deren zeitliche Änderung erfolgt.

4. Verfahren nach Anspruch 1 oder 2, **dadurch gekennzeichnet, daß** die Umschaltung des Abgasstromes auf das Bypass-System abhängig von der Kraftstoffeinspritzmenge der Brennkraftmaschine erfolgt.

5. Verfahren nach Anspruch 1 oder 2, **dadurch gekennzeichnet, daß** die Umschaltung des Abgasstromes auf das Bypass-System abhängig von der Temperatur des SCR-Katalysators (1) oder abhängig von der Temperatur des Abgases vor und nach dem SCR-Katalysator (1) erfolgt.

6. Verfahren nach einem der Ansprüche 1-5, **dadurch gekennzeichnet, daß** dem SCR-Katalysator (1) ein Hydrolysekatalysator (2) vorgeschaltet ist.

7. Verfahren nach Anspruch 1, **dadurch gekennzeichnet, daß** der Abgasstrom über einen, dem Adsorptionskatalysator (7) vorgeschalteten, ebenfalls im Bypaß-System angeordneten Hydrolysekatalysator (8) geleitet wird und in bestimmten Zeitabständen ein Desorptionsvorgang eingeleitet wird, indem kurzzeitig Kraftstoff oder ein Reduktionsmittel zugeführt wird.

8. Verfahren nach Anspruch 7, **dadurch gekennzeichnet, daß** der Desorptionsvorgang eingeleitet wird, wenn der NOₓ-Beladungsgrad des Adsorptionskatalysators (7) einen vorgegebenen Grenzwert überschritten hat.

9. Verfahren nach Anspruch 8, **dadurch gekennzeichnet, daß** der NOₓ-Beladungsgrad des Adsorptionskatalysators (7) mittels eines NOₓ-Sensors (13) stromabwärts des Adsorptionskatalysators (7) erfasst wird.

10. Verfahren nach Anspruch 9, **dadurch gekennzeichnet, daß** der NOₓ-Beladungsgrad des Adsorptionskatalysators (7) mittels einer mathematischen Modellbeziehung ermittelt wird.

## Claims

1. Method for operating an internal combustion engine running with excess air, in which the exhaust gas flow is conducted by means of a main exhaust pipe (4) by way of an NOₓ catalytic converter unit arranged in the main exhaust pipe (4) and consisting at least of an SCR catalytic converter (1) with a device (3) for the controlled injection of reducing agent, and, moreover, the load state of the internal combustion engine is determined constantly, wherein in the event of a rapid increase in load and/or in the warm-up operation of the internal combustion engine at least a portion of the exhaust gas flow is conducted by way of a bypass system (5, 6) to an NOₓ adsorption catalytic converter (7) so that to load the NOₓ adsorption catalytic converter (7) the exhaust gas flows through the series connection consisting of the NOₓ adsorption catalytic converter (7) and the SCR catalytic converter (1).

2. Method according to claim 1, **characterised in that** the switch-over of the exhaust gas flow to the bypass system is effected by means of an exhaust gas valve (6) that is arranged in the main exhaust pipe (4) and which is driven by way of an electric actuator (9).

3. Method according to claim 1 or 2, **characterised in that** the switch-over of the exhaust gas flow to the bypass system is effected at least as a function of the accelerator-pedal position of the internal combustion engine or its change over time.

4. Method according to claim 1 or 2, **characterised in that** the switch-over of the exhaust gas flow to the bypass system is effected as a function of the fuel injection volume of the internal combustion engine.

5. Method according to claim 1 or 2, **characterised in that** the switch-over of the exhaust gas flow to the bypass system is effected as a function of the temperature of the SCR catalytic converter (1) or as a function of the temperature of the exhaust gas upstream of and downstream of the SCR catalytic converter (1).

6. Method according to one of claims 1-5, **characterised in that** a hydrolysis catalytic converter (2) is connected upstream of the SCR catalytic converter (1).

7. Method according to claim 1, **characterised in that** the exhaust gas flow is conducted by way of a hydrolysis catalytic converter (8) which is connected upstream of the adsorption catalytic converter (7) and is also arranged in the bypass system, and a desorption operation is initiated at specific time intervals by briefly supplying fuel or a reducing agent.

8. Method according to claim 7, **characterised in that** the desorption operation is initiated when the level of NOₓ loading of the adsorption catalytic converter (7) has exceeded a predetermined threshold value.

9. Method according to claim 8, **characterised in that** the level of NOₓ loading of the adsorption catalytic converter (7) is determined by means of an NOₓ sensor (13) downstream of the adsorption catalytic converter (7).

10. Method according to claim 9, **characterised in that** the level of NOₓ loading of the adsorption catalytic converter (7) is ascertained by means of a mathematical model relationship.

## Revendications

1. Procédé pour faire fonctionner un moteur à combustion interne travaillant avec un excès d'air, dans lequel on envoie le courant de gaz d'échappement au moyen d'un conduit (4) principal pour les gaz d'échappement sur une unité de pot catalytique NOₓ montée dans le conduit (4) principal pour les gaz d'échappement et constituée d'au moins un pot (1) catalytique RCS ayant un dispositif (3) d'injection commandé d'agent réducteur et on détecte à cet effet en permanence l'état de charge du moteur à combustion interne,
dans lequel, s'il y a une augmentation rapide de charge et/ou au cours de la mise en température du moteur à combustion interne, on envoie au moins une partie des gaz d'échappement par un système (5, 6) de dérivation, à un pot (7) catalytique d'adsorption NOₓ, de sorte que pour charger le pot (7) catalytique d'adsorption NOₓ les gaz d'échappement passent dans le circuit série constitué du pot (7) catalytique d'adsorption NOₓ et du pot (1) catalytique RCS.

2. Procédé suivant la revendication 1, **caractérisé en ce que** l'on effectue la commutation du courant de gaz d'échappement sur le système de dérivation au moyen d'un volet (6) pour le gaz d'échappement monté dans le conduit (4) principal pour les gaz d'échappement et entraîné par un servomoteur (9) électrique.

3. Procédé suivant la revendication 1 ou 2, **caractérisé en ce que** l'on effectue la commutation du courant de gaz d'échappement sur le système de dérivation au moins en fonction de la position de la pédale d'accélérateur du moteur à combustion interne ou de sa variation dans le temps.

4. Procédé suivant la revendication 1 ou 2, **caractérisé en ce que** l'on effectue la commutation du courant de gaz d'échappement sur le système de dérivation en fonction de la quantité de carburant injectée dans le moteur à combustion interne.

5. Procédé suivant la revendication 1 ou 2, **caractérisé en ce que** l'on effectue la commutation du courant de gaz d'échappement sur le système de dérivation en fonction de la température du pot (1) catalytique RCS ou en fonction de la température des gaz d'échappement en amont et en aval du pot (1) catalytique RCS.

6. Procédé suivant l'une des revendications 1 à 5, **caractérisé en ce que** l'on monte un pot (2) catalytique d'hydrolyse en amont du pot (1) catalytique RCS.

7. Procédé suivant la revendication 1, **caractérisé en ce que** l'on envoie le courant de gaz d'échappement dans un pot (8) catalytique d'hydrolyse monté en amont du pot (7) catalytique d'adsorption et monté également dans le système de dérivation et on effectue à certains intervalles de temps une opération de désorption en envoyant brièvement du carburant ou un agent réducteur.

8. Procédé suivant la revendication 7, **caractérisé en ce que** l'on effectue l'opération de désorption lorsque le degré de charge en NOₓ du pot (7) catalytique d'adsorption a dépassé une valeur limite prescrite.

9. Procédé suivant la revendication 8, **caractérisé en ce que** l'on détecte en aval du pot (7) catalytique d'adsorption le degré de charge en NOₓ du pot (7) catalytique d'adsorption au moyen d'un capteur (13) de NOₓ.

10. Procédé suivant la revendication 9, **caractérisé en ce que** l'on détermine le degré de charge de NOₓ du pot (7) catalytique d'adsorption au moyen d'une relation mathématique de modélisation.
